Europäisches Patentamt

European Patent Office

Office européen des brevets

Publication number: **0 292 141**

A2

# EUROPEAN PATENT APPLICATION

Application number: 88303985.1

Int. Cl.⁴: **B60R 25/06 , B60R 25/08**

Date of filing: 03.05.88

---

The title of the invention has been amended (Guidelines for Examination in the EPO, A-III, 7.3).

Priority: 04.05.87 US 46529
06.01.88 US 141331

Date of publication of application:
**23.11.88 Bulletin 88/47**

Designated Contracting States:
**DE ES FR GB IT SE**

Applicant: **WOLO MANUFACTURING CORPORATION**
**1 Saxwood Street**
**Deer Park New York 11729(US)**

Inventor: **Solow E. Stanley**
**65 Shelter Hill Road**
**Plainview, New York 11802(US)**
Inventor: **Solow E. Joseph**
**54 Mitchell Avenue**
**Plainview, New York 11803(US)**

Representative: **Rees, David Christopher et al**
**Kilburn & Strode 30 John Street**
**London WC1N 2DD(GB)**

---

Motor car security device for locking together a floor-mounted gear shift lever and a floor-mounted handbrake handle.

An automobile security device including an extendible lock bar (14) and lock housing (12). A c-shaped hook (21) is fixed on one end of the lock bar, and a based hook (43) is supported by the lock housing (12). The C-hook (21) is positioned to engage a floor mounted gear select lever or gearshift lever (50), and the lock housing (12) and the base hook (43) are thereafter pulled away from the C-hook (21), into engagement with the floor mounted brake handle (52).

EP 0 292 141 A2

FIG. 1

## AUTOMOBILE SECURITY DEVICE FOR LOCKING A FLOOR-MOUNTED GEARSHIFT LEVER

The present invention relates to automobile security devices designed to deter automobile theft.

Original manufacturers generally provide protection against theft of their automobiles through the use of an ignition lock. However, it is relatively easy for a professional thief to defeat an ignition lock by using a master key or a tool for forcibly removing the lock, such as a dent puller. Accordingly, ignition locks in themselves offer relatively little protection, and automobile theft continues to be a major problem, especially in larger cities.

In most American made automobiles, the ignition lock is mounted on the steering column. In automobiles having such an arrangement,it is possible to provide effective protection of the ignition lock using a device such as the Auto Watchman, which is manufactured by the assignee of the present application, Wolo Manufacturing Corporation, and is described in U.S. Patent No. 4,494,391. But, in many automobiles, especially non-U.S. makes, the ignition lock is mounted on or adjacent the dashboard, and thus, cannot be protected in this manner.

U.S. patent No.4,658,613 discloses another ignition lock protector that additionally includes a lock bar which engages the gearshift lever in cars with a column-mounted gearshift. This device not only protects the ignition lock from tampering, but prevents the gearshift lever from being moved out of the "park" position (or the parking gear,in a standard transmission).

A number of other types of theft-deterrent accessory devices, that do not require a steering column-mounted ignition lock or column-mounted gearshift lever, have been proposed. But, these devices tend to be of limited value.

It is therefore an object of the present invention to provide an effective deterrent against car theft for cars that do not have steering-column-mounted ignition locks and further do not have column-mounted gearshift levers.

The present invention therefore provides an automobile security device which represents an effective deterrent to car theft in automobiles of the type that have a floor mounted gear select or gearshift lever. The device is easy to install, and difficult to bypass, even for a professional car thief.

According to the present invention, there is provided an automobile security device for use with a floor-mounted hand brake, having a handle that extends from a base, and a floor-mounted gear select lever or gearshift lever characterised in that the device comprises: a telescoping rod and lock assembly, the rod being axially displaceable relative to the lock assembly, and having a free end spaced from the lock assembly; a first engagement member fixed on the free end of the telescoping rod, the first engagement member having a seat portion facing axially away from the rod and lock; and a second engagement member supported by the lock assembly at the opposite end of the lock assembly to the first engagement member.

The present invention therefore provides an automobile security device which represents an effective deterrent to car theft in automobiles of the type that have a floor mounted gear select or gearshift lever. The device is easy to install, and difficult to bypass, even for a professional car thief.

The seat portion is shaped to receive a lever extending generally perpendicular to the telescoping rod, whereby the device can be positioned so as to extend between the hand brake base and the gearshift or gear select lever of the automobile and the telescoping rod can be extended so that the hook and engagement members snugly engage the hand brake and lever, respectively, to lock them in place.

Preferably, the device includes an elongate member axially fixed to the lock assembly and extending in the opposite direction to the rod, the second engagement member being mounted on the elongate member. Preferably, the second engagement member comprises a hook defining an opening facing away from the lock assembly and terminating in a free end substantially co-extensive with the free end of the elongate member.

Preferably, the lock assembly includes a lock housing and lock means, and the rod comprises a lock bar extending through a hole in the housing, the lock means selectively engaging the lock bar at axially spaced locations. Preferably, the second engagement member includes a seat portion whereby the two seat portions face in axially opposite directions and the two engagement members define opposite ends of the device.

In one variant, the first engagement member comprises a clamping member that includes a clamp element having a jaw movable between an open position and a closed position defining a closed cylindrical space, and means for locking the jaw in the closed position.

Alternatively, the first engagement member is a C-shaped hook having a transversely orientated opening for receiving the gearshift or gear select lever.

Thus, an automobile security device in accordance with the invention might include a lock housing having a hole, and a lock bar extending through the hole and being movable along its axis relative to the housing. A lock may be mounted in the housing which selectively engages the lock bar at axially spaced locations. A first hook, such as a C-shaped member, may be fixed on one end of the lock bar which is sized to engage the shaft of the gearshift lever. A second or base hook may be supported by the lock housing, and is sized appropriately to engage the floor mounted brake handle.

The device may be installed by attaching the C-hook to the gear select lever (or the gearshift lever in a standard transmission), preferably near its upper end, and thereafter pulling the housing and base hook along the lock bar, away from the C-hook, until the base hook engages the base of the floor mounted brake handle. Once in position, the lock is actuated to secure the housing on the lock bar, and prevent the gear select lever from being moved out of the "park" position (or prevent the gearshift from being moved out of the parking gear).

In an alternative embodiment, the first hook is a lockable jaw that can be swung open for positioning the device about the gearshift lever and thereafter closed and locked around the gearshift lever shaft. If desired, the base hook may be rotatably mounted relative to the housing to facilitate mounting about the brake handle.

Thus, a preferred form of the invention may be considered to comprise an automobile security device for use with a floor-mounted hand brake, having a handle that extends from a base, and gear select lever or gearshift lever, the device characterised by: a lock housing having a hole therethrough; a lock bar extending through the hole and being displaceable, along its axis, relative to the lock housing, the lock bar having a free end spaced from said housing; lock means associated with the lock housing for selectively engaging the lock bar at axially spaced locations; a first engagement member fixed on the free end of the lock bar, the member including a seat portion for engaging a first generally cylindrical member; and a second engagement member supported by the lock housing including a seat portion for engaging a second generally cylindrical member, wherein the two seat portions face away from one another, in axially opposite directions, and wherein the first and second engagement members define opposite ends of the security device, whereby in a car that has a floor-mounted gear select lever or gearshift lever and a floor-mounted brake handle, the seat portion of the first engagement member can be positioned to engage the shift lever, the housing and second engagement member pulled along the lock bar, away from the first engagement member, until the seat portion of the second engagement member engages the base of the floor mounted brake handle, and the lock means thereafter locked so that the gearshift lever cannot be moved toward the brake handle.

The invention may also be considered to extend to a method for securing an automobile of the type having a floor-mounted hand brake, having a handle that extends from a base and is pulled upwardly into a locked position, and a floor-mounted gearshift or gear select lever movable toward and away from the brake handle, characterised by the steps of: providing a device having a telescoping rod and lock assembly, with first and second engagement members having oppositely facing, axially oriented, seat portions; moving the brake handle to a locked position and the lever to a forward position away from the brake handle; positioning the device between the hand brake base and lever; extending the rod so that the respective seat portions engage the lever and brake handle, in the vicinity of the base; and locking the telescoping rod against axial movement.

The invention may be carried into practice in various ways and some embodiments will now be described by way of example with reference to the accompanying drawings, in which:

Figure 1 is a view from above of an automobile security device according to the invention;

Figure 2 is a view from above of an alternative embodiment;

Figure 3 is a view of the clamp portion of the embodiment of Figure 2, shown in its open position; and

Figures 4 and 5 are views from the side and from above, respectively, of the device of Figure 2 shown mounted in a car that has a floor mounted gear select lever and a floor mounted brake handle.

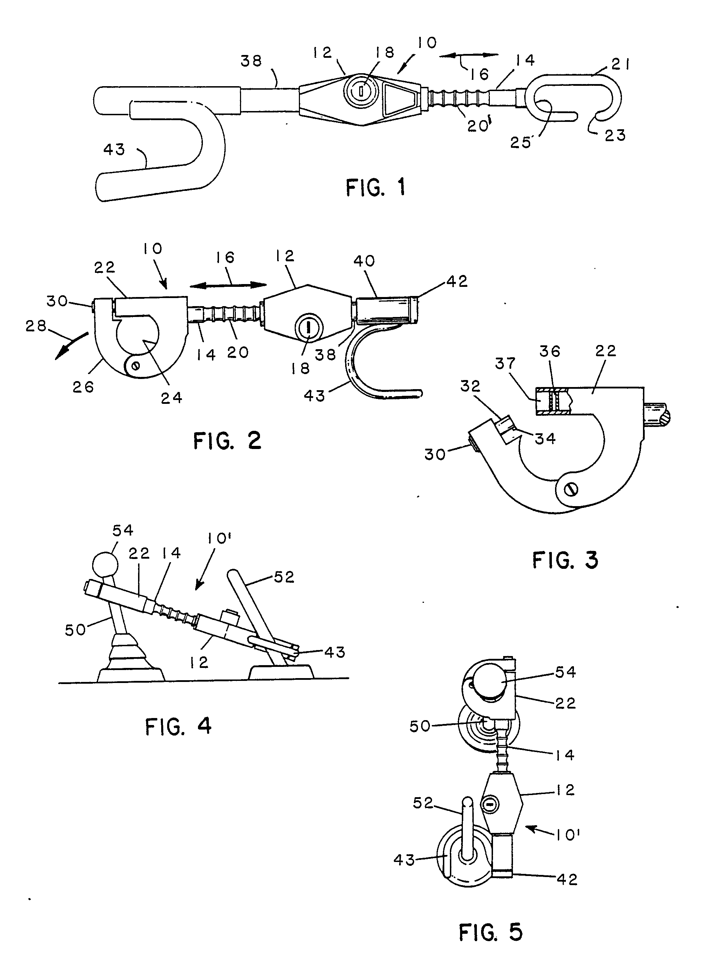

An automobile security device 10 according to the invention includes a lock housing 12 and a lock bar 14. The lock bar 14 extends axially through a hole in the lock housing 12, and is displaceable along its axis relative to the lock housing 12, as shown by the arrow 16. The lock housing 12 includes a lock 18 with a member (not shown) that may be moved selectively into and out of engagement with the lock bar 14 for locking the axial position of the bar 14. As shown in Figure 1, the bar 14 includes axially spaced serrations or grooves 20. The member actuated by the lock 18 selectively engages one of the grooves 20. Lock bars 14 having grooves 20, that are slidably received in a lock housing such as the housing 12 containing a lock 18, are used in known devices such as the Wolo model WB-IO steering wheel-brake pedal lock and need not be described further here.

A hook member such as a C-shaped hook 21 is fixed on the end of the lock bar 14. The C-hook has a transversely oriented opening 23(i.e. the base of the "c" is fixed on the bar and the C is axially oriented) large enough to receive the shaft of a gearshift lever 50 (see Figure 4) and a curved seat 25 facing away from the bar 14, to fit around the gearshift lever once inside the C-hook 21.

A rod 38 is fixed on the housing 12 and extends in a direction coaxial with, and opposite to, the lock bar 14. The rod 38 is preferably of hollow tubular construction so that the end of the lock bar 14 can slide axially freely inside of the rod 38. Finally, a second or base hook 43 is fixed to the rod 38 and the lock housing 12. The hook 43 faces in the opposite direction of the curved seat 35 of C-hook 21.

In the alternative embodiment of Figure 2, a clamp 22 (which is itself a known type) is fixed on one end of the lock bar 14 and includes a hole 24 suitable for engaging the shaft of a gearshift lever. Preferably, the clamp 22 includes a movable jaw 26 that can be opened, as shown by the arrow 28 and by Figure 3, and can be selectively closed and locked with a lock. As shown in Figure 3, the lock 30 rotates a shaft 32, containing a dog 34 which may be rotated into and out of a locking position with a corresponding projection 36 inside the lock receiving portion 37.

In this embodiment, if desired, a cylindrical sleeve 40 is rotatably supported relative to the housing 12 about the rod 38, and the base hook 43 extends from the sleeve 40, so that the sleeve 40 and the hook 43 are rotatable about the axis of the bar 14.

An end stop 42 is welded or otherwise fixed on the rod 38 to limit the axial movement of the sleeve 40.

It should be evident that, with the device shown in either Figure 1 or Figure 2, when the lock 18 is not engaged, the C-hook 21 or clamp 22 may be moved axially towards and away from the lock housing 12 and the base hook 43, and thus it is possible to adjust the length of the device. When the lock 18 is engaged, however, the axial distance between the C-hook 21 or clamp 22 and the base hook 43 is fixed.

Figures 4 and 5 illustrate a floor-mounted gear select lever 50 and a floor mounted emergency or parking brake handle 52 (hand brake). Both the lever 50 and brake handle 52 have conventional cylindrical shaft configurations, and the gearshift lever 50 is further provided with an upper knob 54. The gear select lever 50 is shown in the "park" position, which is its forward-most position. The brake handle 52 is shown in its upraised position, which corresponds to its position for parking the car.

In order to mount the device 10, the gear select lever 50 and the brake handle 52 are moved to their parking positions, as shown in Figure 4. Using by way of illustration the device of Figure 2, the lock 30 is disengaged and the jaw 26 is swung to the open position. The clamp 22 is then position around the shaft of the gearshift lever 50, preferably near its upper end, and the jaw 26 is closed and locked. With the lock 18 in the disengaged position, the housing 12 and base hook 43 are pulled axially along the lock bar 14, until the hook engages the base of the brake handle 52. Once the unit is snugly in position, the lock 18 is engaged.

In the case of the device of Figure 1 , the C-hook 21 is moved sideways so that the lever 50 passes through the opening 23, and the C-hook is pushed forward to that the seat 25 pushes up against the lever 50. The base hook 43 and rod 38 are then pulled downwardly to engage the brake handle 52 just as shown in Figures 4 and 5.

Because of the relative geometry of the gear select lever 50 and brake handle 52, once the lock 18 is engaged, the gear select lever 50 cannot be moved toward the floor mounted brake handle 52. Thus, the car cannot be moved out of the park position (or first gear,in the case of a standard transmission).

Similarly, the brake 52 cannot be released, since the hook substantially prevents its movement to the release (down) position.

The foregoing represents a description of the preferred embodiments of the invention. However, variations and modifications of the embodiments shown and described will be apparent to persons skilled in the art. For example, while the device is described for use with a gear select lever 50 that can be put in "park", i.e. an automatic transmission, the device will work also with a floor mounted gearshift lever of a standard transmission. In this case, the gearshift lever is pushed forward into gear, and the security device prevents the hand brake from being released and the gearshift lever from being moved out of gear, i.e. into neutral or other gears.

## Claims

1. An automobiles security device (10) for use with a floor-mounted hand brake, having a handle (52) that extends from a base, and a floor-mounted gear select lever or gearshift lever (50) characterised in that the device comprises: a telescoping rod (14) and lock assembly (12,18), the rod being axially displaceable relative to the lock assembly, and having a free end spaced from the lock assembly; a first engagement member (21,22) fixed on the free end of the telescoping rod (14), the first engagement member having a seat portion (25) facing axially away from the rod and lock; and a second engagement member (43) supported by the lock assembly at the opposite end of the lock assembly to the first engagement member.

2. A device as claimed in Claim 1 characterised by an elongate member (38) axially fixed to the lock assembly and extending in the opposite direction to the rod (14), the second engagement member (43) being mounted on the elongate member (38).

3. A device as claimed in Claim 2 characterised in that the second engagement member (43) comprises a hook defining an opening facing away from the lock assembly and terminating in a free end substantially co-extensive with the free end of the elongate member.

4. A device as claimed in any preceding claim characterised in that the lock assembly includes a lock housing (12) and lock means (18), and the rod (14) comprises a lock bar extending through a hole in the housing (12), the lock means (18) selectively engaging the lock bar at axially spaced locations (20).

5. A device as claimed in any preceding claim characterised in that the second engagement member (43) includes a seat portion whereby the two seat portions face in axially opposite directions and the two engagement members (21/22,43) define opposite ends of the device.

6. A device as claimed in any preceding claim characterised in that the first engagement member (22) comprises a clamping member that includes a clamp element having a jaw (26) movable between an open position and a closed position defining a closed cylindrical space (44), and means (30) for locking the jaw in the closed position.

7. A device as claimed in any of Claims 1 to 5 characterised in that the first engagement member (21) is a C-shaped hook having a transversely orientated opening (23) for receiving the gearshift or gear select lever.

8. A method for securing an automobile of the type having a floor-mounted hand brake, having a handle (52) that extends from a base and is pulled upwardly into a locked position, and a floor-mounted gearshift or gear select lever (50) movable toward and away from the brake handle, characterised by the steps of:

providing a device having a telescoping rod (14) and lock assembly (12,18), with first and second engagement members having oppositely facing, axially oriented, seat portions; moving the brake handle (52) to a locked position and the lever (5) to a forward position away from the brake handle; positioning the device between the hand brake base and lever (50); extending the rod (14) so that the respective seat portions engage the lever and brake handle, in the vicinity of the base; and locking the telescoping rod against axial movement.

9. An automobile security device for use with a floor-mounted hand brake, having a handle (52) that extends from a base, and gear select lever or gearshift lever (50), the device characterised by: a lock housing (12) having a hole therethrough; a lock bar (14) extending through the hole and being displaceable, along its axis, relative to the lock housing (12), the lock bar (14) having a free end spaced from said housing; lock means (18) associated with the lock housing (12) for selectively engaging the lock bar (14) at axially spaced locations (20); a first engagement member (21,22) fixed on the free end of the lock bar (14), the member including a seat portion (25) for engaging a first generally cylindrical member (50); and a second engagement member (43) supported by the lock housing (12) including a seat portion for engaging a second generally cylindrical member, wherein the two seat portions face away from one another, in axially opposite directions, and wherein the first and second engagement members define opposite ends of the security device.

FIG. 1

FIG. 2

FIG. 3

FIG. 4

FIG. 5